# EUROPEAN PATENT SPECIFICATION

(11) **EP 0 896 994 B1**
(45) Date of publication and mention of the grant of the patent: **05.12.2001**
(21) Application number: 98305758.9
(22) Date of filing: 20.07.1998
(51) Int. Cl.: C09K 11/78

(54) **Rapidly excited luminescent material having high luminance and long decay and method therefor**
Schnell angeregtes lumineszentes Material mit hoher Luminenz und langem Zerfall und Verfahren zur Herstellung desselben
Matériau luminescent à excitation rapide à haute luminance et lente décomposition et procédé pour sa fabrication

(30) Priority: 11.08.1997 JP 22706197
(43) Date of publication of application: 17.02.1999
(73) Proprietor: Chemitech Inc., Fuchu-shi, Tokyo 183 (JP); Beijing Hongye Coating Materials Company, Fengtai District, Beijing (CN)
(72) Inventor: Hao, Qinglong, c/o Beijing Hongye Materials Comp., Fengtai District, Baijing (CN); Xu, Qian, c/o Beijing Hongye Materials Comp., Fengtai District, Baijing (CN); Li, Pengcheng, c/o Beijing Hongye Materials Comp., Fengtai District, Baijing (CN); Gao, Jingfeng, c/o Beijing Hongye Materials Comp., Fengtai District, Baijing (CN); Ogura, Atsushi, Fuchu-shi, Tokyo, 183-0023 (JP); Hao, Quingfen, Fuchu-shi, Tokyo, 183-0023 (JP)
(74) Representative: Baverstock, Michael George Douglas

(56) References cited:
- EP-A- 0 849 344
- DATABASE WPI Section Ch, Week 8829 Derwent Publications Ltd., London, GB; Class L03, AN 88-200216 XP002084471 & JP 63 135482 A (TOSHIBA KK), 7 June 1988
- PATENT ABSTRACTS OF JAPAN vol. 008, no. 246 (C-251), 10 November 1984 & JP 59 128211 A (MATSUSHITA DENSHI KOGYO KK), 24 July 1984
- PATENT ABSTRACTS OF JAPAN vol. 009, no. 118 (E-316), 23 May 1985 & JP 60 009047 A (MATSUSHITA DENSHI KOGYO KK), 18 January 1985

## Description

This invention relates to a rapidly excited luminescent material having a high luminance and a long decay time and a method of preparation.

More specially, this invention relates to a luminescent material which can be excited very rapidly and has a high luminance and a very long decay time, and a method for preparation of it.

Copper-activated zinc sulfide, such as ZnS:Cu, is frequently used in watch or clock dials and safety signs.

In recent years, luminescent materials having a decay time much longer than zinc sulfide-based phosphorescent materials have been developed and put into practical use. More specifically, a long decay luminescent material published in CN1053807A is represented by the formula: m(Sr₁₋ₓ Euₓ )0 · nAl₂O₃ · yB₂O₃ wherein, 1 ≤ m ≤ 5, 1 ≤ n ≤ 8, 0.001 ≤ y ≤ 0.35.

This luminescent material is prepared by mixing strontium oxides and europium oxides, etc. as raw materials or strontium-containing salts or europium-containing salts from which strontium oxides and europium oxides can be obtained after heating as raw materials, firing the mixture of raw materials at 1200°C to 1600°C and then reducing the sintered materials at temperatures of 1000°C to 1400°c under a reducing atmosphere of nitrogen and hydrogen.

Also, an alumina containing sintered material comprising boron as a component has been published in USP No.5,376,303, in TOKUKAI 1996-17 0076 and TOKUKAI 1996-127772. Each of them is a luminescent material having a high luminance and a long decay time and can be excited by sunshine, fluorescent lamp or UV rays.

However, the luminescent materials developed up to now have a decay time from several hours to 10 hours only, and their luminances (brightness) are not satisfactory enough for practical use. The inventors of the invention made efforts to solve these problems and succeeded in developing a new luminescent material having a new crystal structure by combining aluminate and rare earth elements as activators.

Patent applications were made in Japan as well as USA relating to the invented luminescent materials having a high luminance and a long decay time and a method of preparing them.

After that, in the continuous efforts for improving the luminance and prolonging the decay time, a new luminescent material which can be excited and saturated in a very short time and has a high luminance and a long decay time was discovered accidentally.

Furthermore, during preparation of the rapid excited luminescent material having a high luminance and a long decay time, that acid treating at least one of the raw materials contributes to higher luminance and longer decay was discovered. The present invention was completed based on these discoveries.

Therefore, the first object of the invention is to provide a luminescent material which has higher luminance and longer decay time and can be excited and saturated in a very short time.

The second object of the invention is to provide a method for preparing the luminescent material which has higher luminance and longer decay time and can be excited and saturated in a very short time.

The rapidly excited luminescent material having a high luminance and a long decay thus invented is a new crystal, it can be excited in a very short time and has a high initial luminance and a very long decay time. The invented luminescent material is prepared by an invented method consisting of mixing, heating, firing, cooling, pulverizing and sieving etc., specially, mixing the raw materials following the step(a) to step (e), and carbon powders are used in the process of heating, firing and cooling to produce a reducing atmosphere.

The invented method for preparing the new luminescent material is simple, safe and suitable for industrial production.

The objects of the invention are fulfilled separately by the inventions as follows.
1. A luminescent material, represented by the formula:

   (SrEu)Al₂O₄ · [(SrEu)O · n(A1_{1-a-b} B _{b} Q ₐ)₂O₃(OH)]

   wherein Q is at least one selected from Bi, Ca, Mg, Mn,
   a = 0.0005 to 0.002
   b = 0.001 to 0.35 and
   n = 1 to 7
   and characterized by rapid excitation, high luminance and long decaytime.
2. A method for preparing a luminescent material as defined in item 1 which comprises:
   (i) acid treating at least one of the raw materials: a strontium-containing compound, α-type alumina, γ-type alumina, a boron-containing compound, a europium-containing compound, one selected from a group of bismuth-containing compound, calcium-containing compound, magnesium containing compound and manganese-containing compound;
   (ii) grinding and mixing well appropriate amounts of the raw materials;
   (iii) heating the mixture gradually from 400°C up to 1250 °C ~ 1600°C over 7 to 10 hours;
   (iv) firing the mixture at 1250C~1600C for 3 to 5 hours;
   (v) cooling it down to 200°C gradually over 7 to 10 hours;
   (vi) pulverizing and sieving the sintered material;
   wherein the heating, firing and cooling are all conducted in a reducing atmosphere.
3. A method for preparing a luminescent material as defined in item 1 according to item 2 comprising heating the mixture gradually from 400°C up to 1250 °C over 7 to 10 hours and firing the mixture at 1250°C for 3 to 5 hours.
4. A method for preparing a luminescent material as defined in item 1 according to item 2 comprising heating the mixture gradually from 400°C up to 1600°C over 7 to 10 hours and firing the mixture at 1600°C for 3 to 5 hours.
5. A method for preparing a luminescent material as defined in item 1 according to item 2 wherein mixing appropriate amounts of the appropriate raw materials comprises and is in order of steps:
   (a) mixing the strontium-containing compound and the europium-containing compound while acid treating them separately or while acid treating them together;
   (b) precipitating the acid treated and mixed raw materials obtained in the step (a);
   (c) drying the precipitated raw materials and then pulverizing and sieving the precipitated materials;
   (d) mixing the pulverized and sieved raw materials obtained by the step (c) with α-type alumina;
   (e) mixing well the raw materials obtained from the step (d) with the other raw materials.
6. A method for preparing a luminescent material as defined in item 1 according to item 5 wherein the acid used for the acid treatment is one of carbonic acid, nitric acid, sulfuric acid, hydrochloric acid or phosphoric acid.
7. A method for preparing a luminescent material as defined in item 1 according to item 5 or item 6 wherein an organic acid is used in the step (b) as a precipitant.
8. A method for preparing a luminescent material as defined in item 1 according to each of items 5 to 7 wherein the pulverized and sieved sintered material obtained in the step (e) has a particle size of 1 to 3 *µ*m on average.

The inventions are described in more detail as follows. When the luminescent material is excited by sunshine, a fluorescent lamp, heat or impact, specially by UV rays, it can emit visible light for a long time.

The luminescent material thus invented has a special crystal structure represented by the formula described in item 1 and it can be excited and saturated in a very short time and has a high luminance and a long decay time.

The method for preparing the rapidly excited luminescent material having higher luminance and longer decay time, comprises grinding a strontium-containing compound, α-type alumina, γ-type alumina, boron-containing compound, europium-containing compound, at least one selected from the group of a bismuth-containing compound, calcium-containing compound, magnesium-containing compound and manganese-containing compound; acid treating at least one of the raw materials listed above; mixing all the raw materials; heating the mixture gradually from 400°C up to 1250°C~1600°C over 7 to 10 hours; firing the mixture at 1250°C~1600°C for 3 to 5 hours; cooling it down to 200°C gradually over 7 to 10 hours; pulverizing and sieving the sintered material; wherein the heating, firing and cooling are all conducted in a reducing atmosphere. The thus prepared luminescent material is a new crystal and has the characteristics of rapid excitation, higher luminance and longer decay time.

According to the item 2, when the mixture is heated from 400°C up to 1250°C gradually over 7 to 10 hours and fired at 1250°C for 3 to 5 hours, the prepared crystal emits yellowish green; when the mixture is heated from 400°C up to 1600°C gradually over 7 to 10 hours and fired at 1600°C for 3 to 5 hours, the prepared crystal emits blue.

According to the method for preparing the invented luminescent material described in above mentioned items 2 to 4, mixing the raw materials is in order of steps (a) to (e).
(a) mixing SrCO₃ and Eu₂O₃ while acid treating them separately or while acid treating them together;
(b) precipitating the acid treated and mixed raw materials obtained in the step (a);
(c) drying the precipitated raw materials and then pulverizing and sieving the precipitated materials;
(d) mixing the pulverized and sieved raw materials obtained by the step (c) with α-type alumina;
(e) mixing well the raw materials obtained from the step (d) with all the other raw materials.

According to the item 5, the acid used for the acid treatment is one of carbonic acid, nitric acid, sulfuric acid, hydrochloric acid or phosphoric acid.

Also according to the items 5 or 6, an organic acid can be used in step (b) as a precipitant so as to make a speedy precipitation.

Also by pulverizing and sieving the crystal obtained in the step (e), a luminescent material having particle size of 1 to 3 *µ*m on average may be obtained.

According to the formula described in item 1 and according to the method for preparing the invented luminescent material described in item 2, when n=1 and when the mixture is heated from 400°C up to 1250°C gradually over 7 to 10 hours and fired at 1250 °C for 3 to 5 hours, the prepared luminescent material emits yellowish green and has the characteristics of rapid excitation, higher luminance and longer decay time; when n=2 and when the mixture is heated from 400°C up to 1600°C gradually over 7 to 10 hours and fired at 1600°C for 3 to 5 hours, the prepared luminescent material emits blue and has the characteristics of rapid excitation, higher luminance and longer decay time.

With regard to the raw materials of the rapidly excited luminescent material having higher luminance and longer decay time, strontium oxide, strontium-containing compounds from which a strontium oxide can be obtained after heating, for example, strontium carbonate, may be used. α-type alumina and γ-type alumina are used in an appropriate ratio.

Also, boron-containing compound, specifically, boron oxide or boron acid are recommended. Europium is used as an activator and it can be obtained from europium oxide or europium-containing salts from which an europium-oxide can be obtained after heating.

The present rapidly excited luminescent material having higher luminance and longer decay time comprises a sensitizer. The sensitizer is capable of absorbing effectively energy and rapidly transporting the energy to luminescent centers.

Effects of the sensitizer are different from that of co-activators in this meaning. Bi, Ca, Mg and Mn may be selected as the sensitizers used for this invention.

With regard to the raw materials of the sensitizers, oxides of these elements or compounds of them, from which the oxides can be obtained after heating, may be used. For example, bismuth oxide as a bismuth compound, calcium carbonate or calcium oxide as a calcium compound, magnesium carbonate or magnesium oxide as a magnesium compound, manganese oxide as a manganese compound may be used.

Also, with regard to the method for preparing the rapidly excited luminescent material having a high luminance and a long decay time, following the steps (a) to (e) to mix the raw materials, the mixture of all of the raw materials is fired in the presence of carbon.

As an example for illustrating the step (a), acid treating SrCO₃ and Eu₂O₃ respectively and then mixing them together or at first mixing them together and then acid treating the mixture. The acid used for the acid treating is one of carbonic acid, nitric acid, sulfuric acid, hydrochloric acid or phosphoric acid.

Carbonic acid or nitric acid are preferred. These acids are in aqueous solution and concentrations of them would be 5% to 30%, 8% to 20% are better.

In the step (b) to precipitate the acid treated and mixed raw materials obtained in the step (a), keeping it still for a long time is a simple way, but it is better to use precipitant to accelerate the precipitation.

The precipitants used in this step are not specially limited. Organic acids, such carboxylic acids as formic acid, acetic acid, propionic acid, oxalic acid, butyric acid, tartaric acid and benzoic acid are examples.

While adding a precipitant listed above, the acid treated raw material(s) can be precipitated well. As for the step (c) to dry the precipitated raw materials and then to pulverize and sieve the precipitated materials, the precipitated material is dried at room temperature up to 200°C for 10 hours to 2 hours.

Of course the higher the temperature, the shorter the drying time. Drying is followed by a pulverizing and sieving to make the raw material(s) 1 to 3 *µ*m in size.

Then in the step (d) to mix the raw materials together, at first the dried raw material(s) obtained from the step (c) are mixed with α-type Al₂O₃ and then mixed with all of the other raw materials.

As all the raw materials have the same size, they can be mixed well.

All the mixed raw materials are then fired. It is known that the fired crystal has a polysynthetic twinning triclinic crystal structure. α-type alumina (α-Al₂O₃) is 50% to 99% of weight of all the alumina (Al₂O₃) and γ-type alumina (γ-Al₂O₃) is the rest, 1% to 50%.

That in which the α-type alumina is 10% to 20% of weight of all the alumina shows better luminance and longer decay time.

The firing temperatures are different depending on different emission colors. The invented luminescent material emitting green color is heated from a temperature of 400°C to 1250°C over 7 to 10 hours and then fired at 1250°C for 5 to 3 hours in the presence of carbon.

On the other hand, the luminescent material emitting blue color is heated from 400°C to 1600°C over 7 to 10 hours and then fired at 1600°C for 5 to 3 hours in the presence of carbon.

After that, they are cooled down to 200°C gradually over 7 to 10 hours and then pulverized and sieved.

According to this invention, a mixture of strontium carbonate, α-type alumina and γ-type alumina, boronic acid or boron compound, and europium oxide as rare earth element-containing compounds and bismuth compound is fired at relatively low temperature to form a polysynthetic twinning triclinic crystal.

As activator(s) and sensitizer(s) work mutually, the invented luminescent materials can be rapidly excited and have a high luminance and long decay time.

By changing the weight quantity of europium and strontium more or less the sintered crystal may emit different colors.

While n=1 in the formula, the sintered luminescent material emits green color, and while n=2, it emits blue.

Therefore, on increasing n, the emission wavelength is shortened and the firing temperature is raised.

As for the quantity of boron used in this invention, 0.001 to 0.35 is preferred. When it is less than 0.001, no contribution to the long decay time can be expected and when it is more than 0.35, extra-boron compound has a bad influence on the long decay time. The quantity of sensitizer(s) represented by Q in the formula is 0.0005 to 0.002. Less than 0.0005 is not sufficient and more than 0.002 does not match the lattice vacancies.

The luminescent materials thus prepared are very hard. They have a hardness of Moh's 6.2 to 7.5.

According to the method for preparing the rapid excited luminescent material having a high luminance and a long decay, heating, firing and cooling are conducted in the presence of carbon (Direct Carbon Powder Reduction Method).

Burying the mixture of all the raw materials in carbon powders makes it not directly in contact with oxygen in air so as to produce a reducing atmosphere. A mixture of hydrogen and nitrogen gases can also be used for producing the reducing atmosphere.

According to the invented method, a direct carbon powder reduction method is used for preparing the luminescent materials.

The direct carbon powder reduction method is not only economic but also safe. Also according the invented method, α-type alumina is used with γ-type alumina together. As γ-type alumina has lattice vacancies, Bi, Ca, Mg, or Mn can be easily taken in to form a new crystal.

The rapid excited luminescent material having a high luminance and a long decay time has the following properties:

| When n=1; | | |
|---|---|---|
| (1) | Specific gravity | 3.60~3.62 |
| (2) | Powder color | Light yellowish green |
| (3) | Moh's hardness | 6.2~6.5 |
| (4) | Emission peak | 518~522 nm |
| (5) | Emission color | Green |
| (6) | Excitation wavelength | 200~450 nm |
| (7) | Excitation time with 1000 lux | Within 10 minutes |
| (8) | Brightness at the 30th second after stopping excitation | Higher than 6000 mcd/m² |
| (9) | Decay time | More than 20 hours |

| When n=2; | | |
|---|---|---|
| (1) | Specific gravity | 3.69~3.71 |
| (2) | Powder color | Light yellowish green |
| (3) | Moh's hardness | 7.0~7.5 |
| (4) | Emission peak | 487~491 nm |
| (5) | Emission color | Blue |
| (6) | Excitation wavelength | 200~450 nm |
| (7) | Excitation time with 1101 lux | Within 30 minutes |
| (8) | Brightness at the 30th second after stopping excitation | Higher than 3000 mcd/m² |
| (9) | Decay time | More than 20 hours |

The invented rapid excited luminescent materials having a high luminance and a long decay can be used in many ways, for example, mixing the luminescent material into inks, paints or resins to produce luminescent inks, paints or resins and using the luminescent materials in position markings, advertisements, toys, ornaments, stationary, sport goods etc.

The goods with the luminescent materials mixed in can be excited by sunshine or the like and can emit light for 40 to 60 hours, at least 20 to 40 hours at practical use level at night.

They can also be used in a liquid crystal display as a blacklight auxiliary source to save the battery and to make the liquid crystal display lighter.

The invented rapidly excited luminescent materials having a high luminance and a long decay are prepared by the invented method, namely by acid treating SrCO₃ and Eu₂O₃, mixing the raw materials well and then firing the mixture of all the raw materials.

The invented method provides good conditions for taking the sensitizers in the type alumina. As a result, the luminescent materials represented by the formula can be excited rapidly and have a high luminance and a long decay time.

### EXAMPLES

The inventions are illustrated in more detail with respect to the specially preferred embodiments thereof, but the inventions are not limited by any of the examples.

### Example 1

| Raw materials: | |
|---|---|
| SrCO₃ | 14.480g |
| α-Al₂O₃ | 8.630g |
| γ-Al₂O₃ | 1.423g |
| H₃BO₃ | 0.866g |
| Eu₂O₃(0.0005mol) | 0.176g as a activator |
| BiO(0.0005mol) | 0.113g as a sensitizer |

Grinding respectively these raw materials to 2*µ*m on average; mixing SrCO₃ with Eu₂O₃ at first and then putting the mixture into 10% carbonic acid aqueous solution; stirring well; precipitating and drying the precipitate at 120°C for 4 hours and then pulverizing the dried material to 2 *µ*m ; mixing it with α-Al₂O₃ and then with γ-Al₂O₃ and further with all the other raw materials, namely with H₃BO₃ and BiO to prepare a mixture of all the raw materials and then putting the mixture in a crucible.

Burying the crucible in carbon powder and putting them into an electric furnace to heat it from 400°C to 1250°C gradually over 8 hours; firing it at 1250°C for 4 hours, then, cooling it down to 200°C gradually over 8 hours then taking it out; pulverizing it with a ball mill and sieving it by a sieve of 200 mash to prepare a luminescent material (1).

Exciting the luminescent material (1) by 1000 lux for 10 minutes (under a 27w fluorescent lamp). Measuring its luminance at the 30th second after stopping the excitation. It shows properties as follows.

| | |
|---|---|
| Initial luminance at the 30th second after stopping the excitation | 6000 mcd/m² |
| Emission peak | 520 nm |
| Emission color | light green |
| Exciting time (with 1000 lux) | 10 minutes |
| Decay time | 30 hours |
| Moh's hardness | 6.2 |
| Specific gravity | 3.60 |

This luminescent material is represented by the formula described in item (1) wherein n=1.

### Example 2

| Raw materials: | | |
|---|---|---|
| SrCO₃ | 2.170g | |
| CaCO₃ | 8.337g | |
| α-Al₂O₃ | 80.63g | |
| γ-Al₂O₃ | 14.23g | |
| H₃BO₃ | 0.866g | |
| Eu₂O₃(0.0005mol) | 0.176g | as a activator |
| BiO(0.0002mol) | 0.045g | as a sensitizer |
| MgCO₃ | 0.025g | as a sensitizer |

Grinding respectively these raw materials to 2µm in average; mixing SrCO₃ with CaCO₃ and then putting the mixture in 5% carbonic acid aqueous solution; putting Eu₂O₃ in 20% carbonic acid aqueous solution; putting the two solutions together and stirring them well; precipitating it and drying the precipitate at 180°C to 220°C for 3 to 2 hours and then pulverizing the dried material to 2 µm ; mixing it with α-Al₂O₃ and then with all the other raw materials of: γ-Al₂O_{3,} H₃BO₃, MgCO₃ and BiO to prepare a mixture of all the raw materials and then putting the mixture in a crucible.

Burying the crucible in carbon powders and putting them into an electric furnace to heat it from 400°C to 1250°C gradually over 8 hours; firing it at 1250°C for 4 hours; then, cooling it down to 200°C gradually over 8 hours then taking it out; pulverizing it with a ball mill and sieving it by a sieve of 200 mash to prepare a luminescent material (2).

Exciting the luminescent material (2) by 1000 lux for 10 minutes (under a 27w fluorescent lamp). Measuring its luminance at the 30th second after stopping the excitation. It shows the following performance:

| | |
|---|---|
| Initial luminance at the 30th second after stopping the excitation | 6200 mcd/m² |
| Emission peak | 520 nm |
| Emission color | light green |
| Exciting time (with 1000 lux) | 8 minutes |
| Decay time | 40 hours |
| Moh's hardness | 6.3 |
| Specific gravity | 3.62 |

This luminescent material is represented by the formula described in item (1) wherein n=1.

### Example 3

| Raw materials: | | |
|---|---|---|
| SrCO₃ | 12.397g | |
| CaCO₃ | 1.471g | |
| α-Al₂O₃ | 8.063g | |
| γ-Al₂O₃ | 1.423g | |
| H₃BO₃ | 0.866g | |
| Eu₂O₃ (0.0005mol) | 0.176g | as a activator |
| BiO(0.0002mol) | 0.045g | as a sensitizer |
| Mn₂O3 | 0.047g | as a sensitizer |

Grinding respectively these raw materials to 2*µ* m on average; mixing SrCO₃ with Eu₂O₃ and then putting the mixture in 15% carbonic acid aqueous solution; precipitating it and drying the precipitate at 80°C to 100°C for 5 to 4 hours and then pulverizing the dried material to 2 *µ*m ; mixing it with α-Al₂O₃ and then with all the other raw materials of γ-Al₂O₃, H₃BO₃, CaCO₃, Mn₂O₃ and BiO to prepare a mixture of all the raw materials and then putting the mixture in a crucible.

Burying the crucible in carbon powders and putting them into an electric furnace to heat it from 400°C to 1250°C gradually over 8 hours; firing it at 1250°C for 4 hours. Then, cooling it down to 200 °C and taking it out.

Pulverizing it with a ball mill and sieving it by a sieve of 200 mash to prepare a luminescent material (3). Exciting the luminescent material (3) by 1000 lux for 10 minutes (under a 27w fluorescent lamp).

Measuring its luminance at the 30th second after stopping the excitation. It shows the following performance:

| | |
|---|---|
| Initial luminance at the 30th second after stopping the excitation | 6200 mcd/m² |
| Emission peak | 520 nm |
| Emission color | light green |
| Exciting time (with 1000 lux) | 8 minutes |
| Decay time | 40 hours |
| Moh's hardness | 6.3 |
| Specific gravity | 3.62 |

This luminescent material is represented by the formula described in item (1) wherein n=1.

### Example 4

| Raw materials: | | |
|---|---|---|
| SrCO₃ | 5.780g | |
| CaCO₃ | 5.880g | |
| α-Al₂O₃ | 5.692g | |
| γ-Al₂O₃ | 3.794g | |
| H₃BO₃ | 0.866g | |
| Eu₂O₃ | 0.176g | as a activator |
| MgCO₃ | 0.021g | as a sensitizer |
| Mn₂O₃ | 0.039g | as a sensitizer |

Grinding respectively these raw materials to 2 µm on average; mixing SrCO₃ with CaCO₃ and then putting the mixture in 5% carbonic acid aqueous solution; putting Eu₂O₃ in 20% carbonic acid aqueous solution and then putting the two solutions together and stirring them well; precipitating it and drying the precipitate at 180°C to 220°C for 3 to 2 hours and then pulverizing the dried material to 2 *µ*m ; mixing it with α -Al₂O₃ and then with all the other raw materials of γ-Al₂O₃, H₃BO₃, MgCO₃ and BiO to prepare a mixture of all the raw materials and then putting the mixture in a crucible.

Burying the crucible in carbon powders and putting them into an electric furnace to heat it from 400°C to 1600°C gradually over 8 hours; firing it at 1600°C for 4 hours; then, cooling it down to 200°C gradually over 8 hours then taking it out; pulverizing it with a ball mill and sieving it by a sieve of 200 mash to prepare a luminescent material (4).

Exciting the luminescent material (4) by 1000 lux for 10 minutes (under a 27w fluorescent lamp). Measuring its luminance at the 30th second after stopping the excitation. It shows the following performance:

| | |
|---|---|
| Initial luminance at the 30th second after stopping the excitation | 3200 mcd/m² |
| Emission peak | 490 nm |
| Emission color | Blue |
| Exciting time (with 1000 lux) | 30 minutes |
| Decay time | 50 hours |
| Moh's hardness | 7.3 |
| Specific gravity | 3.70 |

This luminescent material is represented by the formula described in item (1) wherein n=2.

### Example 5

| Raw materials: | | |
|---|---|---|
| SrCO₃ | 2.070g | |
| CaCO₃ | 8.337g | |
| α-Al₂O₃ | 8.063g | |
| γ-Al₂O₃ | 1.423g | |
| H₃BO₃ | 0.866g | |
| Eu₂O₃ | 0.176g | as a activator |
| Mn₂O₃ | 0.030g | as a sensitizer |
| BiO | 0.113g | as a sensitizer |

Following the same method as that of the example 4 to prepare a luminescent material (5). Example (5) has a performance as follows.

| | |
|---|---|
| Initial luminance at the 30th second after stopping the excitation | 3200 mcd/m2 |
| Emission peak | 490 nm |
| Emission color | Blue |
| Exciting time (with 1000 lux) | 30 minutes |
| Decay time | 50 hours |
| Moh's hardness | 7.3 |
| Specific gravity | 3.70 |

This luminescent material is represented by the formula described in item (1) wherein n=2.

### Example 6

| Raw materials: | | |
|---|---|---|
| SrCO₃ | 2.070g | |
| CaCO₃ | 8.337g | |
| α-Al₂O₃ | 16.126g | |
| γ-Al₂O₃ | 2.846g | |
| H₃BO₃ | 1.732g | |
| Eu₂O₃ | 0.176g | as a activator |
| MgCO₃ | 0.025g | as a sensitizer |
| BiO | 0.045g | as a sensitizer |

To prepare a mixture of all the raw materials following the same method as that of example 4.

Burying the crucible in carbon powders and putting them into an electric furnace to heat it from 400°C to 1600°C gradually over 8 hours; firing it at 1600°C for 4 hours; then, cooling it down to 200°C gradually over 8 hours and taking it out; pulverizing it with a ball mill and sieving it by a sieve of 200 mash to prepare a luminescent material (6).

Exciting the luminescent material (6) by 800lux for 30 minutes (under a 27w fluorescent lamp). Measuring its luminance from the first 5th second up to saturation after stopping the excitation. It shows the following performance:

| | |
|---|---|
| Initial luminance at the 30th second after stopping the excitation | 2210 mcd/m² |
| Emission peak | 490 nm |
| Emission color | Blue |
| Exciting time (with 800 lux) | 30 minutes |
| Decay time | 30 hours |
| Moh's hardness | 7.3 |
| Specific gravity | 3.70 |

This luminescent material is represented by the formula described in item (1) wherein n=2.

Table 1 shows the results of comparing traditional luminescent materials with the invented luminescent materials as regard to the saturation depending on the exciting time.

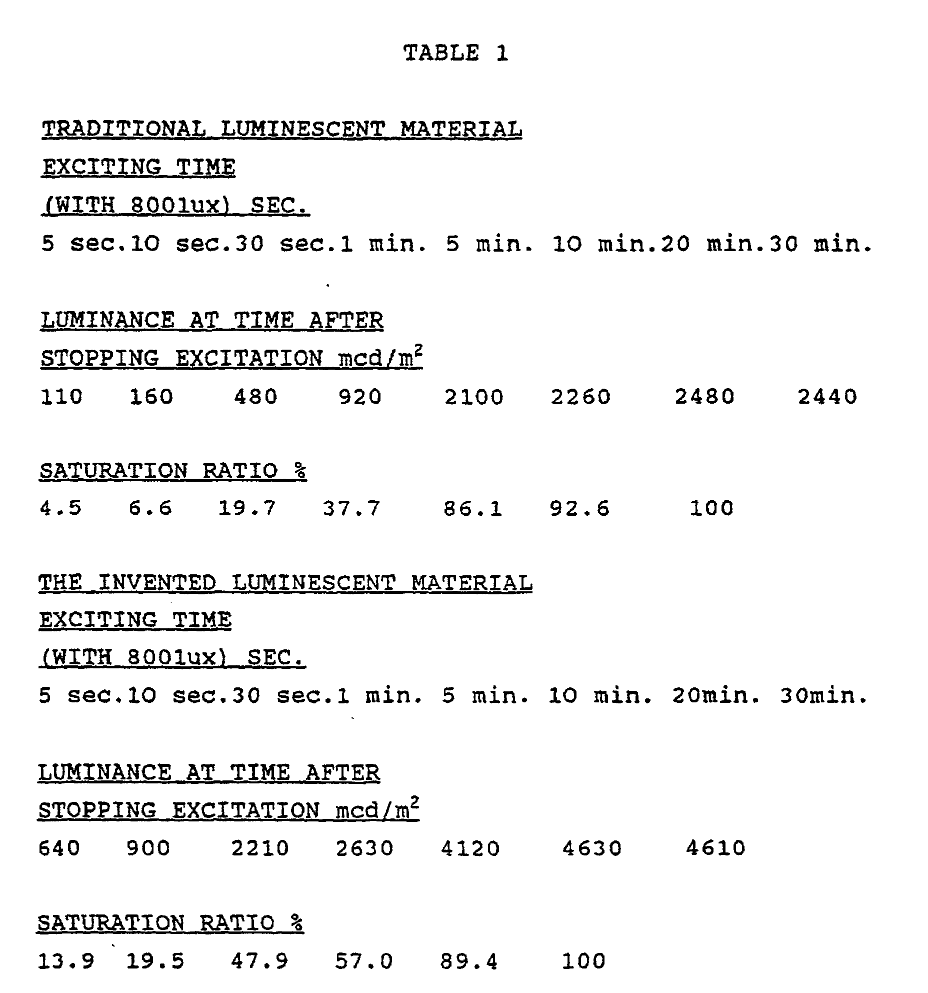

### Comparative Example 1

| Raw materials: | | |
|---|---|---|
| SrCO₃ | 14.73g | |
| α-Al₂O₃ | 9.93g | |
| γ-Al₂O₃ | 0.10g | |
| H₃BO₃ | 0.22g | |
| Eu₂O₃ | 0.035g | as a activator |
| Dy₂O₃ | 0.030g | as a co-activator |

Grinding these raw materials and mixing them together; putting the mixture of all the raw materials in a crucible and burying the crucible in carbon powders and then putting it in en electric furnace, heating it from 400°C to 1250°C over 8 hours, firing at 1250°C for 4 hours and then cooling it to 200°C gradually over 8 hours, taking it out, and pulverizing by a ball mill and sieving by a sieve of 200 mesh to prepare a comparative luminescent material (7). The luminescent material (7) has the following performance:

| | |
|---|---|
| Initial luminance at the 30th second after stopping the excitation | 4500 mcd/m² |
| Emission peak | 520 nm |
| Emission color | Light green |
| Exciting time (with 1000 lux) | 30 minutes |
| Decay time | 40 hours |
| Moh's hardness | 6.2 |
| Specific gravity | 3.60 |

### Comparative Example 2

| Raw materials: | | |
|---|---|---|
| SrCO₃ | 14.73g | |
| α-Al₂O₃ | 13.71g | |
| γ-Al₂O₃ | 5.86g | |
| H₃BO₃ | 0.94g | |
| Eu₂O₃ | 0.035g | as a activator |
| Dy₂O₃ | 0.075g | as a co-activator |

Grinding these raw materials and mixing them together; putting the mixture of all the raw materials in a crucible and burying the crucible in carbon powders and then putting it in en electric furnace; heating it from 400°C to 1600°C over 10 hours, firing at 1600°C for 4 hours and then cooling it to 200°C gradually over 8 hours, taking it out, and pulverizing by a ball mill and sieving by a sieve of 200 mesh to prepare a comparative luminescent material (8).

Measuring its luminance from the first 5th second up to saturation after stopping the excitation. It shows the following performance:

| | |
|---|---|
| Initial luminance at the 30th second after stopping the excitation | 480 mcd/m² |
| Emission peak | 489 nm |
| Emission color | Blue |
| Exciting time (with 1000 lux) | 30 minutes |
| Decay time | 50 hours |
| Moh's hardness | 7.3 |

Also, saturation of the comparative luminescent material(8) depending on the exciting time is shown in Table 1 as the traditional one as regard to comparison with the invented luminescent material.

## Claims

1. A luminescent material, represented by the formula:
(SrEu)Al₂O₄ · [(SrEu)O · n(Al_{1-a-b} B_{b} Qₐ)₂O₃(OH)]
wherein:
Q is at least one selected from Bi, Ca, Mg, Mn,
a = 0.0005 to 0.002
b = 0.001 to 0.35, and
n = 1 to 7,
and **characterized by** rapid excitation, high luminance and long decay.

2. A method for preparing a luminescent material as defined in claim 1 which comprises:
( i ) acid treating at least one of the raw materials: a strontium-containing compound, α-type alumina, γ-type alumina, a boron containing compound, a europium-containing compound, one selected from a group of a bismuth-containing compound, calcium-containing compound, magnesium-containing compound and manganese-containing compound;
(ii ) grinding and mixing well appropriate amounts of the raw materials;
(iii) heating the mixture gradually from 400°C up to 1250 °C ~ 1600°C over 7 to 10 hours;
(iv) firing the mixture at 1250°c~1600°C for 3 to 5 hours;
( v ) cooling it down to 200°C gradually over 7 to 10 hours;
(vi) pulverizing and sieving the sintered material; wherein heating, firing and cooling are all conducted in a reducing atmosphere.

3. A method for preparing a luminescent material as defined in claim 1 according to claim 2 comprising heating the mixture gradually from 400°C up to 1250°C over 7 to 10 hours and firing the mixture at 1250°C for 3 to 5 hours.

4. A method for preparing a luminescent material as defined in claim 1 according to claim 2 comprising heating the mixture gradually from 400°C up to 1600°C over 7 to 10 hours and firing the mixture at 1600°C for 3 to 5 hours.

5. A method for preparing a luminescent material as defined in claim 1 according to claim 2 wherein mixing appropriate amounts of the raw materials comprises and in order of steps:
(a) mixing the strontium-containing compound and the europium containing compound while acid treating them separately or while acid treating them together;
(b) precipitating the acid treated and mixed raw materials obtained in the step (a);
(c) drying the precipitated raw materials and then pulverizing and sieving the precipitated materials;
(d) mixing the pulverized and sieved raw materials obtained by the step (c) with α-type alumina;
(e) mixing well the raw materials obtained from the step (d) with the other raw materials.

6. A method for preparing a luminescent material as defined in claim 1 according to claim 5 wherein the acid used for the acid treatment is one of carbonic acid, nitric acid, sulfuric acid, hydrochloric acid or phosphoric acid.

7. A method for preparing a luminescent material as defined in claim 1 according to claim 5 or claim 6 wherein an organic acid is used in the step (b) as a precipitant.

8. A method for preparing a luminescent material as defined in claim 1 according to each of claims 5 to claim 7 wherein the pulverized and sieved fired material obtained in the step (e) has particle size of 1 to 3 *µ*m on average.

## Patentansprüche

1. Leuchtmaterial, dargestellt durch die Formel:
(SrEu)Al₂O₄· [(SrEu)O · n(Al_{1-a-b}B_{b}Qₐ)₂O₃(OH)]
worin:
Q mindestens eines aus Bi, Ca, Mg, Mn gewählt ist
a = 0,0005 bis 0,002
b = 0,001 bis 0,35 und
n = 1 bis 7,
und das durch schnelle Anregung, große Luminanz und langes Abklingen charakterisiert ist.

2. Verfahren zur Herstellung eines Leuchtmaterials nach Anspruch 1, welches umfasst:
(i) Säurebehandlung von mindestens einem der Rohmaterialien: eine Strontium enthaltende Verbindung, α-Typ-Aluminiumoxid, γ-Typ-Aluminiumoxid, eine Bor enthaltende Verbindung, eine Europium enthaltende Verbindung, eines ausgewählt aus einer Gruppe einer Bismuth enthaltenden Verbindung, einer Calcium enthaltenden Verbindung, einer Magnesium enthaltenden Verbindung und einer Mangan enthaltenden Verbindung;
(ii) Zerkleinern und gutes Mischen von geeigneten Mengen der Rohmaterialien;
(iii) schrittweises Erhitzen der Mischung von 400°C hoch bis 1250°C ∼ 1600°C über 7 bis 10 Stunden;
(iv) Brennen der Mischung bei 1250°C ∼ 1600°C für 3 bis 5 Stunden;
(v) schrittweises Abkühlen bis 200°C über 7 bis 10 Stunden;
(vi) Pulverisieren und Sieben des gesinterten Materials;
wobei das Erhitzen, Brennen und Kühlen alle in einer reduzierenden Atmosphäre durchgeführt werden.

3. Verfahren zur Herstellung eines Leuchtmaterials, wie es in Anspruch 1 definiert ist, nach Anspruch 2, umfassend das schrittweise Erhitzen der Mischung von 400°C hoch bis 1250°C über 7 bis 10 Stunden und das Brennen der Mischung bei 1250°C für 3 bis 5 Stunden.

4. Verfahren zur Herstellung eines Leuchtmaterials, wie es in Anspruch 1 definiert ist, nach Anspruch 2, umfassend das schrittweise Erhitzen der Mischung von 400°C hoch bis 1600°C über 7 bis 10 Stunden und das Brennen der Mischung bei 1600°C für 3 bis 5 Stunden.

5. Verfahren zur Herstellung eines Leuchtmaterials, wie es in Anspruch 1 definiert ist, nach Anspruch 2, worin das Mischen geeigneter Mengen der Rohmaterialien in dieser Reihenfolge der Schritte umfasst:
(a) Mischen der Strontium enthaltenden Verbindung und der Europium enthaltenden Verbindung, während sie separat oder zusammen säurebehandelt werden;
(b) Abscheiden der säurebehandelten und gemischten Rohmaterialen, die im Schritt (a) erhalten werden;
(c) Trocknen der abgeschiedenen Rohmaterialien und dann Pulverisieren und Sieben der abgeschiedenen Materialien;
(d) Mischen der pulverisierten und gesiebten Rohmaterialien, die in Schritt (c) erhalten werden, mit α-Typ-Aluminiumoxid;
(e) gutes Mischen der Rohmaterialien, die in Schritt (d) erhalten werden, mit den anderen Rohmaterialien.

6. Verfahren zur Herstellung eines Leuchtmaterials, wie es in Anspruch 1 definiert ist, nach Anspruch 5, worin die Säure, die für die Säurebehandlung verwendet wird, eine Carbonsäure, Salpetersäure, Schwefelsäure, Chlorwasserstoffsäure oder Phosphorsäure ist.

7. Verfahren zur Herstellung eines Leuchtmaterials, wie es in Anspruch 1 definiert ist, nach Anspruch 5 oder 6, worin eine organische Säure im Schritt (b) als Abscheidemittel verwendet wird.

8. Verfahren zur Herstellung eines Leuchtmittels, wie es in Anspruch 1 definiert ist, nach den Ansprüchen 5 bis 7, worin das pulverisierte und gesiebte gebrannte Material, das in Schritt (e) erhalten wird, eine mittlere Teilchengröße von 1 bis 3 µm hat.

## Revendications

1. Matière luminescente répondant à la formule :
(SrEu)Al₂O₄.[(SrEu)O·n(Al_{1-a-b} B_{b}Qₐ)₂O₃(OH)]
dans laquelle :
Q est au moins un élément choisi parmi Bi, Ca, Mg, Mn,
a = 0,0005 à 0,002
b = 0,001 à 0,35, et
n = 1 à 7,
et **caractérisée par** une excitation rapide, une luminance élevée et un affaiblissement prolongé.

2. Procédé de préparation d'une matière luminescente telle que définie dans la revendication 1, qui comprend :
(i) le fait de traiter par un acide au moins l'une des matières premières suivantes : un composé contenant du strontium, de l'alumine du type α, de l'alumine du type y, un composé contenant du bore, un composé contenant de l'europium, un composé choisi dans le groupe constitué d'un composé contenant du bismuth, d'un composé contenant du calcium, d'un composé contenant du magnésium et d'un composé contenant du manganèse ;
(ii) on broie et on mélange soigneusement des quantités appropriées des matières premières ;
(iii) on chauffe progressivement le mélange à une température de 400 °C à 1250 °C - 1600 °C pendant 7 à 10 heures ;
(iv) on calcine le mélange à 1250-1600 °C pendant 3 à 5 heures ;
(v) on le refroidit progressivement à 200 °C pendant 7 à 10 heures ;
(vi) on pulvérise et on tamise la matière frittée ; le chauffage, la calcination et le refroidissement étant tous effectués en atmosphère réductrice.

3. Procédé de préparation d'une matière luminescente telle que définie dans la revendication 1 conformément à la revendication 2, comprenant le fait de chauffer progressivement le mélange de 400 °C à 1250 °C pendant 7 à 10 heures, et le fait de calciner le mélange à 1250 °C pendant 3 à 5 heures.

4. Procédé de préparation d'une matière luminescente telle que définie dans la revendication 1 conformément à la revendication 2, comprenant le fait de chauffer progressivement le mélange à une température de 400 °C jusqu'à 1600 °C pendant 7 à 10 heures, et de calciner le mélange à 1600 °C pendant 3 à 5 heures.

5. Procédé de préparation d'une matière luminescente telle que définie dans la revendication 1 conformément à la revendication 2, dans lequel le mélange de quantités appropriées des matières premières comprend dans l'ordre les étapes suivantes :
(a) mélanger le composé contenant du strontium et le composé contenant de l'europium tout en les traitant séparément par un acide ou ensemble par un acide ;
(b) précipiter les matières premières traitées par un acide et mélangées obtenues dans l'étape (a) ;
(c) sécher les matières premières précipitées puis pulvériser et tamiser les matières précipitées ;
(d) mélanger les matières premières pulvérisées et tamisées obtenues dans l'étape (c) avec de l'alumine du type α ;
(e) mélanger soigneusement les matières premières obtenues dans l'étape (d) avec les autres matières premières.

6. Procédé de préparation d'une matière luminescente telle que définie dans la revendication 1 conformément à la revendication 5, dans lequel l'acide utilisé pour le traitement par un acide est choisi parmi l'acide carbonique, l'acide nitrique, l'acide sulfurique, l'acide chlorhydrique ou l'acide phosphorique.

7. Procédé de préparation d'une matière luminescente telle que définie dans la revendication 1 conformément à la revendication 5 ou à la revendication 6,
dans lequel on utilise un acide organique dans l'étape (b) comme agent de précipitation.

8. Procédé de préparation d'une matière luminescente telle que définie dans la revendication 1 conformément à chacune des revendications 5 à 7, dans lequel la matière pulvérisée et tamisée calcinée obtenue dans l'étape (e) présente une taille moyenne de particules de 1 à 3 *µ*m.
